# FASCICULE DE BREVET EUROPEEN

(11) **EP 0 560 421 B1**
(45) Date de publication et mention de la délivrance du brevet: **16.07.1997**
(21) Numéro de dépôt: 93200529.1
(22) Date de dépôt: 25.02.1993
(51) Int. Cl.: D21C 9/16, D21C 5/02, D21C 9/10

(54) **Procédé pour la décoloration et le blanchiment de vieux papiers colorés**
Verfahren zum Entfärben und Bleichen von Altpapier
Process for the discolouration and bleaching of waste paper

(30) Priorité: 09.03.1992 US 848065; 04.02.1993 AU 32801/93
(43) Date de publication de la demande: 15.09.1993
(73) Titulaire: SOLVAY INTEROX (Société Anonyme), B-1050 Bruxelles (BE)
(72) Inventeur: Hill, Roy T., Seabrook, Texas 77586 (US); Walsh, Patricia B., Kingwood, Texas 77339 (US); Nugent, Anthony J., Sulwich Hill, Sidney 2203 (AU); Skinner, John E., Hillsoale, N.S.W. 2036 (AU)
(74) Mandataire: Decamps, Alain René François

(56) Documents cités:
- EP-A- 0 133 559
- EP-A- 0 190 723
- US-A- 4 404 061

## Description

L'invention concerne un procédé pour la décoloration et le blanchiment de vieux papiers en vue de leur recyclage. Il s'adresse plus particulièrement aux vieux papiers colorés.

L'industrie papetière utilise comme source de matières premières principale des fibres cellulosiques provenant du bois. Parmi celles-ci, les fibres provenant des vieux papiers recyclés constituent une source de plus en plus importante. Ces vieux papiers sont habituellement désintégrés en phase aqueuse, le plus souvent dans un pulpeur, de façon à obtenir une pâte qui est généralement utilisée telle quelle ou en mélange avec de la pâte cellulosique non recyclée pour la confection de papiers et de cartons d'emballage ainsi que de papier journal. La proportion de fibres cellulosiques de récupération atteignant souvent un niveau élevé qu'il est très difficile de dépasser, d'autres débouchés ont également été envisagés pour les vieux papiers, à savoir : leur incorporation dans les pâtes destinées à la fabrication de papier impression-écriture ainsi que de papier "tissue". Il est important dans ce cas de disposer de pâte qui présente un niveau élevé de blancheur. Ce niveau élevé de blancheur peut habituellement être atteint au moyen de traitements de désencrage et/ou de blanchiment.

Le recyclage des vieux papiers rencontre un obstacle important en la présence, dans une proportion importante d'entre eux, de colorants de natures diverses. Ceux-ci s'avèrent très difficiles à neutraliser étant donné qu'ils restent fixés solidement aux fibres cellulosiques et ne se laissent décolorer que dans des conditions opératoires qui sont très souvent dommageables pour les fibres de cellulose elles-mêmes.

Dans le cas de certaines catégories de vieux papiers, comme, par exemple, les vieux papiers autocopiants sans carbone, il a été possible de les décolorer en les soumettant à un traitement au moyen d'un composé peroxydé en milieu alcalin (brevet US-4381969 au nom d'INTEROX).

Un traitement susceptible de permettre la décoloration des vieux papiers colorés de toutes origines consiste à mettre ces papiers en pâte et à leur faire subir ensuite un traitement au moyen d'un hypochlorite de métal alcalin ou alcalino-terreux (Pulp and Paper Manufacture, 3rd Edition, Vol. 3, Secondary Fibers and Non-Wood Pulping, F. Hamilton, B. Leopold and M.J. Kocurek, 1987, The Joint Textbook Committee of The Paper Industry TAPPI CPPA, Atlanta et Montréal, page 234, 3e paragraphe, R.P. Singh : A. Color Stripping".

Dans de nombreux cas, les vieux papiers ne peuvent être décolorés d'une manière suffisamment complète par un traitement au moyen d'un composé peroxydé en milieu alcalin et il est bien souvent nécessaire de faire appel à des traitements complémentaires souvent préjudiciables à la matière cellulosique. La décoloration des pâtes provenant des vieux papiers au moyen d'hypochlorite est quant à elle responsable d'une dégradation importante des fibres de cellulose et limite l'emploi des papiers ainsi décolorés à des qualités de papier de qualité inférieure.

L'invention a pour but de fournir un procédé de décoloration des vieux papiers colorés qui ne fait pas appel à un réactif contenant du chlore actif et qui préserve les qualités intrinsèques des fibres de cellulose.

A cet effet, l'invention concerne un procédé pour décolorer et blanchir des vieux papiers colorés dans lequel les vieux papiers colorés sont soumis à un traitement au moyen d'un réactif oxydant comprenant essentiellement une solution aqueuse d'au moins un composé peroxygéné et d'un ion halogénure, le composé peroxygéné étant sélectionné dans le groupe consistant en l'acide monoperoxysulfurique, l'un quelconque des sels de cet acide, les mélanges de deux ou plusieurs sels de cet acide et les mélanges d'acide monoperoxysulfurique avec au moins un de ses sels.

Par vieux papiers colorés, on entend désigner des papiers exempts de bois, des papiers contenant une proportion importante de pâte mécanique ou des mélanges de ces papiers ayant subi un traitement de coloration dans la masse à l'intervention d'un colorant pour fibres cellulosiques. Ces vieux papiers peuvent provenir de cassés de fabrication colorés aussi bien que de la collecte de papiers usagés. Les vieux papiers exempts de bois ont donné de bons résultats.

Dans le procédé selon l'invention, le traitement à l'acide monoperoxysulfurique ou l'un de ses sels consiste à traiter les vieux papiers avec l'acide inorganique répondant à la formule H₂SO₅ (encore appelé acide de Caro) ou l'un de ses sels de métaux alcalins, alcalino-terreux ou d'ammonium, ou encore avec un mélange de plusieurs de ces sels ou d'acide monoperoxysulfurique avec un ou plusieurs de ces sels. Le monoperoxysulfate de potassium a donné de bons résultats.

L'acide monoperoxysulfurique ou les sels mis en oeuvre peuvent, dans une variante intéressante au procédé selon l'invention, avoir été préparés immédiatement avant leur emploi par réaction d'une solution aqueuse concentrée d'acide sulfurique ou de ses sels avec une solution aqueuse concentrée d'un composé peroxygéné, par exemple, le peroxyde d'hydrogène. Par solutions concentrées, on entend désigner, respectivement, des solutions d'H₂SO₄ de concentration d'au moins environ 10 moles par litre et d'H₂O₂ de concentration d'au moins environ 20 % en poids.

Selon l'invention, le traitement des vieux papiers colorés au moyen d'acide monoperoxysulfurique est effectué en présence d'un ion halogénure. Par ion halogénure, on entend désigner tout anion appartenant à la famille des halogènes ou un mélange d'au moins deux de ces ions dans des proportions quelconques. De préférence, on sélectionnera l'ion halogénure parmi les ions chlorure, bromure et iodure ou les mélanges d'au moins deux de ces ions. L'ion chlorure est particulièrement préféré.

Les ions halogénures sont avantageusement mis en oeuvre sous la forme d'halogénures de métaux alcalins ou de métaux alcalino-terreux. Tous les métaux alcalins ou alcalino-terreux conviennent, en raison de leur bonne solubilité dans l'eau. On peut aussi, en variante, utiliser une solution aqueuse d'un halogénure d'hydrogène.

La quantité d'acide monoperoxysulfurique ou d'un de ses sels mise en oeuvre dans le procédé selon l'invention est généralement d'au moins environ 0,3 g pour 100 g de pâte sèche et, de préférence, d'au moins environ 0,5 g pour 100 g de pâte sèche. Il convient aussi que cette quantité d'acide peroxymonosulfurique ou d'un de ses sels ne dépasse pas environ 3 g pour 100 g de pâte sèche et, de préférence, environ 2,8 g pour 100 g de pâte sèche.

La quantité d'ions halogénures à mettre en oeuvre dépend de celle de l'acide peroxymonosulfurique ou de l'un de ses sels. En général une quantité d'ions halogénures d'au moins environ 25 % du poids d'acide peroxymonosulfurique ou d'un de ses sels et, de préférence, d'au moins environ 50 % de ce poids, convient bien. Il est également avantageux que cette quantité d'ions halogénures ne dépasse pas environ 150 % du poids d'acide peroxymonosulfurique et, de préférence, pas environ 130 % de ce poids.

Dans une première variante au procédé selon l'invention, qui est préférée, on effectue le traitement à l'acide monoperoxysulfurique ou l'un de ses sels dans une étape de blanchiment consécutive à l'étape préliminaire de mise en pâte des vieux papiers colorés.

Dans cette variante, les vieux papiers sont d'abord mis en pâte, le plus souvent dans un pulpeur en présence de réactifs chimiques. Les réactifs les plus souvent utilisés en pulpeur sont les réactifs alcalins tels que l'hydroxyde de sodium, de calcium ou le carbonate de sodium.

A l'issue de cette étape préliminaire de traitement avec des réactifs chimiques, les vieux papiers se présentent sous la forme d'une pâte qui peut alors, selon l'invention, être traitée par de l'acide monoperoxysulfurique ou l'un de ses sels dans une étape de blanchiment subséquente.

Dans une autre variante au procédé selon l'invention, le traitement des vieux papiers colorés au moyen d'acide monoperoxysulfurique ou l'un de ses sels est effectué dans le pulpeur lors de la mise en pâte de ces vieux papiers.

En option, on peut faire suivre l'étape de mise en pâte des vieux papiers colorés, d'une étape de purification de la pâte, afin de la débarrasser d'une bonne partie des encres qu'elle peut contenir. Cette étape de purification est généralement effectuée selon l'une des techniques bien connues d'élimination des encres par lavage ou par flottation. Avantageusement, l'étape de décoloration selon l'invention fait suite à cette étape d'élimination des encres.

Lorsque la pâte subit un traitement de purification après sa mise en pâte, il peut être avantageux d'incorporer dans le pulper de l'étape de mise en pâte certains additifs qui faciliteront l'enlèvement des encres. Si l'épuration est effectuée par lavage, ces additifs pourront consister, par exemple, en des agents dispersants destinés à mieux éliminer les particules d'encre dans les eaux de lavage. Dans le cas où, au contraire, on élimine les encres par un traitement de flottation, ces additifs seront de préférence choisis parmi les agents collecteurs, les agents moussants et le silicate de sodium pour aider au décrochage et à la séparation des particules d'encre dans la mousse qui s'accumule à la surface des cellules de flottation.

L'invention peut être réalisée à des pH très différents. Le traitement des vieux papiers colorés au moyen d'acide monoperoxysulfurique ou l'un de ses sels selon l'invention s'effectue de préférence à un pH acide. Par pH acide, on entend désigner un pH ne dépassant pas environ 3,5 et, de préférence, 3. Il convient cependant que le pH ne soit pas exagérément acide, des valeurs d'au moins environ 0,5 et, de préférence 1,5 convenant bien.

En variante, on peut cependant, de manière alternative, mais non préférée, effectuer le traitement des vieux papiers colorés selon l'invention au moyen d'acide monoperoxysulfurique ou l'un de ses sels à des pH plus élevés et même à un pH proche de la neutralité. En général, on ne dépassera pas le pH de 8. Ce pH se situera le plus souvent entre 7,5 et 5,5 et, de préférence, ne dépassera pas 7 et ne sera pas inférieur à 6.

Les exemples qui suivent sont donnés dans le but d'illustrer l'invention, sans pour autant en limiter sa portée. Les exemples 2 à 8 et 10 ont été réalisés selon l'invention et les exemples 1R et 9R ont été réalisés, à titre de comparaison, dans des conditions opératoires mettant en oeuvre un réactif de décoloration/blanchiment non conforme à l'invention.

### Exemple 1R : (non conforme à l'invention)

Un échantillon de vieux papiers colorés de qualité xérographique a été mis en pâte et lavé. La pâte lavée présentait une couleur beige et la mesure de blancheur a donné la valeur de 50,3 °GE (mesuré suivant la norme TAPPI 452).

La pâte obtenue a ensuite été traitée au moyen de 1 g de NaClO et de 0,5 g de NaOH pour 100 g de pâte sèche à une température de 60 °C et pendant 60 minutes à un pH initial de 11,8 et à une consistance de 12 % en pâte sèche.

Après traitement, on a mesuré la blancheur de la pâte (en °GE) ainsi que ses caractéristiques chromatiques suivant le système colorimétrique L,a,b de Hunter, sa longueur d'onde dominante (LOD en nm) et sa viscosité (en cps) selon la norme SCAN C15:62. Les résultats des mesures ont été les suivants :

| | Pâte non traitée | Pâte traitée NaClO |
|---|---|---|
| Blancheur, °GE | 50,3 | 78,4 |
| L | 83,5 | 94,1 |
| a | 3,8 | -0,2 |
| b | 12,7 | 5,6 |
| LOD, nm | 581,9 | 576,9 |
| viscosité, cps | 14,5 | 7,2 |

### Exemple 2 : (conforme à l'invention)

Le même échantillon de pâte lavée de vieux papiers colorés que celui utilisé à l'exemple 1R a été traité pendant 60 minutes à 60 °C, à un pH initial de 2,7 par 1 g de monoperoxysulfate de potassium (KMPS) et de 0,5 g d'acide chlorhydrique pour 100 g de matières sèches et à une consistance de 12 % en pâte sèche.

A l'issue de l'essai, les mêmes mesures qu'à l'essai 1R ont été effectuées sur la pâte traitée. Les résultats de ces mesures ont été les suivants :

| | Pâte traitée KMPS/Cl- |
|---|---|
| Blancheur, °GE | 78,5 |
| L | 94,3 |
| a | 0,2 |
| b | 6,3 |
| LOD, nm | 577,9 |
| viscosité, cps | 8,9 |

On voit que le traitement selon l'invention a permis de décolorer la pâte aussi efficacement que le traitement à l'hypochlorite tout en limitant de manière importante la diminution de viscosité.

### Exemples 3 à 8 : (selon l'invention)

L'effet d'un traitement de décoloration a été étudié sur le même échantillon de pâte lavée qu'à l'exemple 1R à une consistance de 12 % en matières sèches et à pH 2 ajusté au moyen d'acide sulfurique, les quatre conditions de température, de durée, de quantités de monoperoxysulfate et d'ions chlorure (incorporés sous la forme de NaCl) étant variées.

Chaque essai a été suivi d'une analyse de la pâte traitée en vue de la détermination de la valeur de la blancheur, du coefficient L, du coefficient b et de la viscosité.

Les conditions choisies et les résultats mesurés ont été portés dans le tableau 1 qui suit.

| Essai No | Temp. °C | Durée min. | % KMPS | % Cl- | Blancheur °GE | Coeff. L | Coeff. b | LOD nm | Viscos. cps |
|---|---|---|---|---|---|---|---|---|---|
| 3 | 51,7 | 105 | 1,13 | 0,38 | 81,6 | 94,9 | 4,6 | 577,6 | 10,9 |
| 4 | 51,7 | 45 | 1,13 | 1,13 | 82,0 | 94,9 | 4,4 | 577,3 | 10,7 |
| 5 | 65,6 | 75 | 0,75 | 0,75 | 83,4 | 95,3 | 4,0 | 577,4 | 10,8 |
| 6 | 65,6 | 135 | 0,75 | 0,75 | 83,3 | 96,4 | 4,2 | 577,3 | 10,9 |
| 7 | 65,6 | 75 | 0,75 | 1,50 | 83,7 | 95,4 | 3,9 | 577,8 | 11,0 |
| 8 | 93,3 | 75 | 0,75 | 0,75 | 81,6 | 94,9 | 4,8 | 577,7 | 8,7 |

### Exemple 9R : (non conforme à l'invention)

Un échantillon de papier coloré en bleu provenant de cassés de fabrication colorés a été mis en pâte et lavé. La pâte obtenue a ensuite été traitée avec 5 g de monoperoxysulfate de potassium (KMPS) par 100 g de pâte sèche à une température de 23°C et pendant 120 minutes à un pH initial < 4,0 et à une consistance de 10 % en pâte sèche.

Après traitement, les caractéristiques chromatiques de la pâte selon le système colorimétrique L, a, b de Hunter (norme TAPPI T524) ont été mesurées.

Les résultats des mesures ont été les suivants :

| | Pâte non traitée | Pâte traitée avec KMPS |
|---|---|---|
| L | 83,93 | 84,18 |
| a | -6,07 | -5,44 |
| b | -9,65 | -9,37 |

Ces résultats montrent qu'aucune décoloration n'a été réalisée.

### Exemple 10 : (selon l'invention)

Le même échantillon lavé de papier coloré en bleu que celui employé à l'exemple 9R a été traité pendant 120 minutes à 23°C, à un pH initial < 4,0 avec 5 g de monoperoxysulfate de potassium (KMPS) et 0,1 g d'acide chlorhydrique par 100 g de matières solides à une consistance de 10 % en pâte sèche.

A la fin de l'essai, les mêmes mesures que dans l'exemple 1R ont été effectuées sur la pâte traitée. Les résultats de ces mesures ont été les suivants :

| | Pâte non traitée | Pâte traitée avec KMPS |
|---|---|---|
| L | 83,93 | 88,32 |
| a | -6,07 | -4,31 |
| b | -9,65 | -2,25 |

Ces résultats montrent que la pâte traitée avec KMPS/Cl- a été décolorée de façon importante.

## Revendications

1. Procédé pour décolorer et blanchir des vieux papiers colorés dans lequel les vieux papiers colorés sont soumis à un traitement au moyen d'un réactif oxydant comprenant essentiellement une solution aqueuse d'au moins un composé peroxygéné sélectionné dans le groupe consistant en l'acide monoperoxysulfurique, l'un quelconque de ses sels de cet acide, les mélanges de deux ou plusieurs sels de cet acide et les mélanges d'acide monoperoxysulfurique avec au moins un de ses sels, caractérisé en ce que l'on effectue le traitement en présence d'un ion halogénure.

2. Procédé selon la revendication 1, caractérisé en ce que l'on effectue le traitement oxydant dans une étape de blanchiment consécutive à l'étape préliminaire de mise en pâte des vieux papiers colorés.

3. Procédé selon la revendication 1, caractérisé en ce que l'on effectue le traitement dans un pulpeur lors de l'étape préliminaire de mise en pâte des vieux papiers colorés.

4. Procédé selon l'une quelconque des revendications 1 à 3, caractérisé en ce que l'on effectue le traitement en milieu acide à un pH inférieur à 3,5.

5. Procédé selon l'une quelconque des revendications 1 à 3, caractérisé en ce que l'on effectue le traitement à un pH acide proche de la neutralité compris entre 5,5 et 7,5.

6. Procédé selon l'une quelconque des revendications 1 à 5, caractérisé en ce que le traitement est effectué au moyen de monoperoxysulfate de potassium.

7. Procédé selon l'une quelconque des revendications 1 à 6, caractérisé en ce que l'ion halogénure est mis en oeuvre sous la forme d'un halogénure d'au moins un métal alcalin ou alcalino-terreux.

8. Procédé selon l'une quelconque des revendications 1 à 7, caractérisé en ce que l'ion halogénure est sélectionné parmi les ions chlorure, bromure et iodure et les mélanges de ces ions.

9. Procédé selon la revendication 8, caractérisé en ce que l'ion halogénure est un ion chlorure.

10. Procédé selon l'une quelconque des revendications 1 à 9, caractérisé en ce que le traitement des vieux papiers est appliqué à une pâte qui a préalablement été soumise à une opération d'élimination des encres choisie parmi le lavage et la flottation.

## Patentansprüche

1. Verfahren zum Enffärben und Bleichen von farbigem Altpapier, bei dem das farbige Altpapier mit einem oxidierenden Reagenz behandelt wird, das im wesentlichen eine wäßrige Lösung von wenigstens einer peroxidhaltigen Verbindung, die aus der Gruppe ausgewählt ist, die aus Peroxomonoschwefelsäure, irgendeinem der Salze dieser Säure, den Gemischen aus zwei oder mehreren Salzen dieser Säure und den Gemischen von Peroxomonoschwefelsäure mit wenigstens einem ihrer Salze besteht, umfaßt, dadurch gekennzeichnet, daß man die Behandlung in Gegenwart eines Halogenidions ausführt.

2. Verfahren gemäß Anspruch 1, dadurch gekennzeichnet, daß man die Oxidationsbehandlung in einem Bleichschritt, der dem einleitenden Schritt der Stoffauflösung des farbigen Altpapiers folgt, ausführt.

3. Verfahren gemäß Anspruch 1, dadurch gekennzeichnet, daß man die Behandlung in einem Pulper während des einleitenden Schritts der Stoffauflösung des farbigen Altpapiers ausführt.

4. Verfahren gemäß einem der Ansprüche 1 bis 3, dadurch gekennzeichnet, daß man die Behandlung in saurem Milieu bei einem pH-Wert kleiner 3,5 ausführt.

5. Verfahren gemäß einem der Ansprüche 1 bis 3, dadurch gekennzeichnet, daß man die Behandlung bei einem sauren pH-Wert nahe der Neutralität zwischen 5,5 und 7,5 ausführt.

6. Verfahren gemäß einem der Ansprüche 1 bis 5, dadurch gekennzeichnet, daß die Behandlung mittels Kaliumperoxomonosulfat ausgeführt wird.

7. Verfahren gemäß einem der Ansprüche 1 bis 6, dadurch gekennzeichnet, daß das Halogenidion in Form eines Halogenids wenigstens eines Alkali- oder Erdalkalimetalls eingesetzt wird.

8. Verfahren gemäß einem der Ansprüche 1 bis 7, dadurch gekennzeichnet, daß das Halogenidion unter dem Chlorid-, Bromid- und Iodid-Ion und den Gemischen dieser Ionen ausgewählt ist.

9. Verfahren gemäß Anspruch 8, dadurch gekennzeichnet, daß das Halogenidion ein Chloridion ist.

10. Verfahren gemäß einem der Ansprüche 1 bis 9, dadurch gekennzeichnet, daß die Altpapierbehandlung auf einen Zellstoffbrei angewendet wird, der zuvor einem unter der Wäsche und der Flotation ausgewählten Arbeitsgang zur Entfernung der Druckerschwärze unterzogen worden ist.

## Claims

1. A process for colour stripping and bleaching of coloured waste paper, wherein the coloured waste paper is submitted to a treatment by means of an oxidizing reactant essentially comprising an aqueous solution of at least one peroxygen compound selected from the group consisting of monoperoxysulfuric acid, any one of the salts of this acid, mixtures of two or more salts of this acid and mixtures of monoperoxysulfuric acid with at least one of its salts, characterised in that the treatment is carried out in the presence of a halide ion.

2. The process as claimed in claim 1, characterised in that the treatment with the oxidising reactant is performed in a bleaching stage following the preliminary stage of pulping of the coloured waste paper.

3. The process as claimed in claim 1, characterised in that the treatment is performed in a pulper during the preliminary stage of pulping of the coloured waste paper.

4. The process as claimed in claim 1, characterised in that the treatment is performed in an acidic medium at a pH lower than 3,5.

5. The process as claimed in any one of claims 1 to 3, characterised in that the treatment is performed at an acidic pH close to neutrality of between 5,5 and 7,5.

6. The process as claimed in any one of claims 1 to 5, characterised in that the treatment is performed by means of potassium monoperoxysulphate.

7. The process as claimed in any one of claims 1 to 6, characterised in that the halide ion is used in the form of a halide of at least one alkali or alkaline-earth metal.

8. The process as claimed in any one of claims 1 to 7, characterised in that the halide ion is selected from chloride, bromide and iodide ions and mixtures of these ions.

9. The process as claimed in claim 8, characterised in that the halide ion is a chloride ion.

10. The process as claimed in any one of claims 1 to 9, characterised in that the treatment of waste paper is applied to a pulp which has previously been subjected to an operation of ink removal chosen from washing and flotation.
